# EUROPEAN PATENT APPLICATION

(11) **EP 0 954 162 A2**
(43) Date of publication of application: **03.11.1999**
(21) Application number: 98122981.8
(22) Date of filing: 03.12.1998
(51) Int. Cl.: H04N 1/10

(54) **Scanner carriage counterweight**

(30) Priority: 28.04.1998 US 67946
(71) Applicant: HEWLETT-PACKARD COMPANY, Palo Alto, California 94304-1181 (US)
(72) Inventor: Cook, Stephen J., Loveland, CO 80537 (US)
(74) Representative: Schoppe, Fritz, Dipl.-Ing.

(57) **Abstract**

A flatbed scanner with a counterweight (202) attached to the carriage cable (222) on the return loop in a position opposite of the carriage (200). The counterweight (202) may be approximately equal to the weight of the carriage (200). The counterweight (202) may move in the opposite direction as the carriage (200). For example, as the carriage (200) moves from the front to the back of the scanner chassis, the counterweight (202) would move from the back to the front of the scanner chassis. If the scanner is on an incline, as the carriage (200) is moving up the incline, the counterweight (202) would be moving down the incline and vice versa with the counterweight (202) actually countering the weight of the carriage (200). With a counterweight (202), a scanner can be used at any angle from flat to vertical or any rotational position without changing the motor torque requirements.

## Description

### FIELD OF THE INVENTION

The present invention relates generally to the field of optical scanners and more particularly to an optical scanner with a counterweight on the carriage that enables the scanner to operate in any position or orientation.

### BACKGROUND OF THE INVENTION

Optical scanners produce machine readable data which is representative of a scanned object, e.g., a page of printed text. Most optical scanners employ line-focus systems in which light from an illuminated Scan line on the object is imaged by a lens onto a linear photosensor array or detector positioned remotely from the object. The linear photosensor array is typically a single dimension array of photoelements, such as a CCD array, that correspond to small area locations along the illuminated scan line. These small area locations are commonly referred to as "picture elements" or "pixels". Each photoelement produces a data signal that is representative of the intensity of light from the corresponding pixel. The data signals from the photoelements are received and processed by an appropriate data processing system which may subsequently store the data on a suitable medium or generate a display signal therefrom for reproducing an image of the object with a display device such as a CRT or a printer.

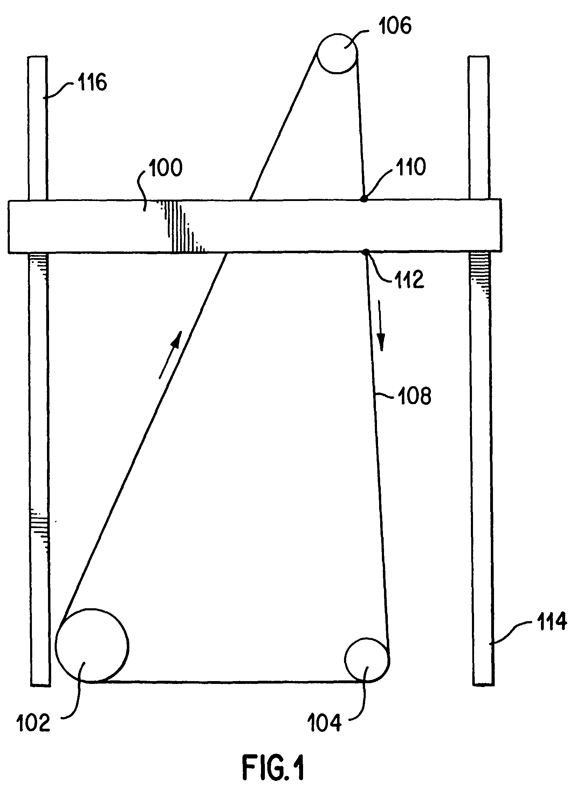

In flatbed scanners, an optical carriage 100 is moved along under the document to be scanned, capturing one line of data at a time, see Figure 1. In most flatbed scanners, the carriage 100 is driven by a continuous belt or cable 108 which is attached to the carriage 100 at points 110 and 112. This cable 108 winds around beings 104 and 106 in a continuous path in the scanner between the carriage 100 and driving motor 102. In addition to the length of cable connecting to the carriage which goes from the front to the back of the scanner, there is also a return length from the front to the back. If the scanner is not level, the carriage 100 will gain or lose altitude during this traverse. If the motor 102 driving the carriage 100 has enough torque, the carriage 100 can be pulled up this incline or lowered down it without much problem. However, if there is a torque limitation, as is generally the case, this elevation change will result in the motor not being able to lift the carriage 100 up the incline, resulting in data loss. Also, the motor 102 may speed up as the carriage 100 moves down the incline if the motor 102 torque cannot resist the gravitational pull acting on the weight of the carriage 100. In the extreme case, the scanner could be in a position where the carriage 100 actually needs to be lifted and lowered in a vertical direction.

Due to the constant push to reduce the manufacturing cost of scanners, smaller and less powerful motors are being put into new scanner products. For instance, when only a universal serial bus (USB) or an on-board battery is used to supply the power to the scanner instead of a normal power supply connected to an outlet in the wall, there will be limited power available for the motor. This may be barely enough to overcome the friction in the transportation system, much less the force required to push a carriage up an incline.

Accordingly, there is a need for a flatbed scanner that is capable of continually scanning without data loss regardless of the position or angle of incline of the scanner. It would also be advantageous if such a scanner did not have any more significant power consumption needs than the current scanners.

### SUMMARY OF THE INVENTION

The above and other aspects of the present invention are accomplished in a flatbed scanner with a counterweight attached to the carriage cable on the return loop in a position opposite of the carriage. The counterweight should be approximately equal to the weight of the carriage. The counterweight would move in the opposite direction as the carriage. For example, as the carriage moves from the front to the back of the scanner chassis, the counterweight would move from the back to the front of the scanner chassis. If the scanner is on an incline, as the carriage is moving up the incline, the counterweight would be moving down the incline and vice versa with the counterweight actually countering the weight of the carriage. With a counterweight, a scanner can be used at any angle from flat to vertical without changing the motor torque requirements.

The above and other objects, features and advantages of the present invention will be better understood by reading the following more particular description of the invention, presented in conjunction with the following drawings.

### BRIEF DESCRIPTION OF THE DRAWINGS

Figure 1 illustrates a top view of a basic flatbed scanner carriage assembly according to the prior art; and
Figure 2 illustrates a top view of a flatbed scanner carriage assembly with a counterweight according to the present invention.

### DETAILED DESCRIPTION OF THE PREFERRED EMBODIMENT

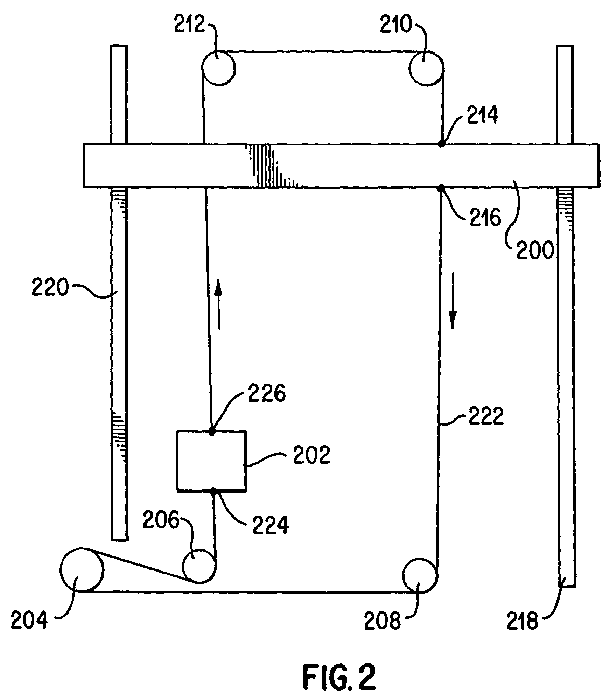

Figure 2 illustrates a flatbed scanner carriage assembly with a counterweight according to the present invention. Scanner carriage 200 is attached to cable 222 at points 214 and 216. Cable 222 loops around bearings 206, 208, 210 and 212 and is driven by motor 204. A counterweight 202 is attached to cable 222 at points 224 and 226, which is opposite carriage 200. Counterweight 202 is approximately of equal weight as scanner carriage 200. Scanner carriage 200 is guided within the scanner by guide rails 218 and 220.

In operation, as the scanner carriage 200 moves from the front of the scanner to the back of the scanner, counterweight 202 moves from the back of the scanner to the front of the scanner, and vice versa. In other words, the carriage 200 and the counterweight 202 are always moving in opposite directions. If the carriage 200 is going up an incline, the counterweight 202 is going down the incline at the same angle and its weight exactly counters the weight of the carriage 200. It is preferable to have the carriage 200 and the counterweight 202 aligned at approximately the same angle, such that the carriage 200 and the counterweight 202 move in approximately opposite directions. However, if, as shown in Figure 1, the return length of cable 222 is not aligned at the same angle as the cable length attached to the carriage 200, the weight of the counterweight 202 may be adjusted to provide the proper counterweight force. However, such a system would be more difficult to adjust for every possible inclined position that the scanner could be placed in.

With counterweight 202, the scanner may be used at any angle from flat to vertical or any rotated position, such as scanning a poster on a wall, without changing the motor torque requirements. Since the motor 204 must drive twice the inertia due to the added weight of the counterweight 202, the acceleration and deceleration rates of the carriage 200 will be less, however, steady state speed requirements can be met with only the motor torque necessary to overcome system friction.

The foregoing description of the present invention has been presented for purposes of illustration and description. It is not intended to be exhaustive or to limit the invention to the precise form disclosed, and other modifications and variations may be possible in light of the above teachings. For example, the scanner may be designed with a scanner lid that flips backward in order to permit the scanner to be used in a pseudo portable fashion, such as for scanning documents and posters on the wall with the scanner in a vertical or rotated position-The scanner could also be designed with a different bearing system, such as a single guide rail, rather than two guide rails as shown in Figures 1 and 2. Also, the scanner may be positioned and used in a vertical position on the user's work space, if counter top space is an issue. Further, pulleys 210 and 212 could be combined into a single larger pulley.

The embodiment was chosen and described in order to best explain the principles of the invention and its practical application to thereby enable others skilled in the art to best utilize the invention in various embodiments and various modifications as are suited to the particular use contemplated, It is intended that the appended claims be construed to include other alternative embodiments of the invention except insofar as limited by the prior art.

## Claims

1. A flatbed scanner comprising:
an optical carriage (200);
a sable (222) attached to said optical carriage (200);
a counterweight (202) attached to said cable (222) in a position opposite said optical carriage (200) within said flatbed scanner; and
a motor (204) attached to said cable (222), said motor (204) moving said optical carriage (200) and said counterweight (202) in opposing directions within said flatbed scanner during a scanning operation.

2. The flatbed scanner according to claim 1 wherein said counterweight (202) is approximately the same weight as said optical carriage (200).

3. The flatbed scanner according to claim 1 wherein said cable (222) is routed within said flatbed scanner such that said counterweight (202) and said optical carriage (200) move in substantially opposite directions within said flatbed scanner during a scan operation.

4. The flatbed scanner according to claim 1 wherein said flatbed scanner may be operated on any position.

5. The flatbed scanner according to claim 1 wherein said flatbed scanner may be operated in any inclined position.

6. The flatbed scanner according to claim 1 wherein said flatbed scanner may be operated in a vertical position.

7. The flatbed scanner according to claim 1 wherein said flatbed scanner may be operated in a rotated position.

8. A method for operating a flatbed scanner comprising the following steps:
(a) a cable (222) moving an optical carriage (200) in a first direction during a scanning operation; and
(b) said cable (222) moving a counterweight (202) in a second direction, wherein said second direction is substantially opposite said first direction during said scanning operation.

9. The method of operating a flatbed scanner according to claim 8 wherein said counterweight (202) is substantially the same weight as said optical carriage (200).

10. The method of operating a flatbed scanner according to claim 8 wherein said flatbed scanner may be operated in any positional orientation.
